**Europäisches Patentamt**

(19) **European Patent Office**

**Office européen des brevets**

(11) Numéro de publication: **0019518**
**B1**

(12) # FASCICULE DE BREVET EUROPEEN

(45) Date de publication du fascicule du brevet:
04.05.83

(21) Numéro de dépôt: **80400610.4**

(22) Date de dépôt: **06.05.80**

(51) Int. Cl.³: **H 04 N 5/14**

(54) **Dispositif de commande automatique de la fonction de transfert d'un système de transmission vidéofréquence en vue d'améliorer la perception des images.**

(30) Priorité: **11.05.79 FR 7911991**

(43) Date de publication de la demande:
**26.11.80 Bulletin 80/24**

(45) Mention de la délivrance du brevet:
**04.05.83 Bulletin 83/18**

(84) Etats contractants désignés:
**BE DE GB NL**

(56) Documents cités:
**US-A-3 979 555**
**US-A-3 983 320**
**APPLIED OPTICS, vol. 15, no. 2, février 1976, Los Angeles, California, US ANDREWS: »Monochrome digital image enhancement«, pages 495—503.**
**IBM TECHNICAL DISCLOSURE BULLETIN, vol. 13, no. 11, avril 1971, New York, USA CHOW: »Nonlinear processor of radiographic images«, pages 3272—3273.**
**COMP. CON. 79, Nineteenth IEEE computer society international conference, 4—7 septembre 1979, Long Beach, USA ORBACH et al. »On-line image enhancement in the time domain with a microprocessor«, pages 226—230.**

(73) Titulaire: **THOMSON-CSF, 173, Boulevard Haussmann, F-75379 Paris Cedex 08 (FR)**

(72) Inventeur: **Favreau, Michel, "THOMSON-CSF" - SCPI 173, bld Haussmann, F-75360 Paris Cedex 08 (FR)**
Inventeur: **Bajon, Jean, "THOMSON-CSF" - SCPI 173, bld Haussmann, F-75360 Paris Cedex 08 (FR)**
Inventeur: **Cattoen, Michel, "THOMSON-CSF" - SCPI 173, bld Haussmann, F-75360 Paris Cedex 08 (FR)**
Inventeur: **Soca, Serge, "THOMSON-CSF" - SCPI 173, bld Haussmann, F-75360 Paris Cedex 08 (FR)**
Inventeur: **Longuet, Maurice, "THOMSON-CSF" - SCPI 173, bld Haussmann, F-75360 Paris Cedex 08 (FR)**
Inventeur: **Delattre, Christian, "THOMSON-CSF" - SCPI 173, bld Haussmann, F-75360 Paris Cedex 08 (FR)**

(74) Mandataire: **Turlèque, Clotilde et al, THOMSON-CSF SCPI 173, Bld Haussmann, F-75379 Paris Cedex 08 (FR)**

## Dispositif de commande automatique de la fonction de transfert d'un systeme de transmission vidéofréquence en vue d'améliorer la perception des images

La présente invention concerne les dispositifs de commande de la fonction de transfert d'un système vidéo, afin d'obtenir en réception une image contenant le maximum d'informations visibles.

Il est connu que pour avoir une reproduction fidèle d'une image à transmettre, il est nécessaire de linéariser la fonction de transfert globale des systèmes vidéo du fait de la non linéarité de la caractéristique de transfert des tubes synthétiseurs et analyseurs.

En outre, il est possible à l'utilisateur d'ajuster la caractéristique de transfert de son téléviseur en fonction de l'éclairement local afin de rendre l'image reçue plus perceptible.

Ce réglage qui permet au gré de l'utilisateur de retoucher la caractéristique de transfert du téléviseur, présente toutefois l'inconvénient de ne permettre qu'un réglage identique pour toutes les images, alors que chaque condition de prise de vues demanderait un réglage différent de façon à améliorer la perceptibilité des images. Ce réglage n'est donc pas automatique.

Une correction préliminaire peut être effectuée également du côté de la prise de vue. Les opérateurs ont en effet à leur disposition certains réglages : niveau du noir, niveau du blanc (diaphragme des objectifs), et quelquefois modification de la fonction de transfert d'amplitude soit globalement sur l'ensemble de l'échelle des demi-teintes (gamma) soit partiellement au voisinage du noir (étirage des noirs, »black stretch«). Ces modifications sont manuelles au greé de l'opérateur de caméra, ou automatique en fonction du courant de sortie du tube analyseur (Diaphragme automatique).

Mais même dans ce cas, du fait des conditions de visualisation, la perception des informations utiles n'est pas optimale en fonction des conditions de prise de vues.

Une autre méthode consiste à effectuer une égalisation de la distribution des luminances du signal contenant les informations à visualiser. Mais les structures actuellement connues pour mettre en application ce procédé sont uniquement numériques.

La demande de brevet US 3 979 555 décrit un dispositif où chaque valeur numérique du signal vidéo est comparée par rapport à une suite de valeurs de seuils déterminant la valeur corrigée du signal vidéo. La demande de brevet US 3 983 320 décrit un dispositif où chaque valeur numérique du signal vidéo adresse une mémoire RAM pour y lire une valeur corrigée du signal vidéo.

D'une part la définition de l'image est limitée par la vitesse de travail des circuits logiques de ces dispositifs et d'autre part dans ces deux dispositifs la correction est réalisée en supprimant un certain nombre de niveaux de gris pour augmenter le contraste entre les niveaux de gris restant. Le nombre de bits du signal corrigé est inférieur au nombre de bits du signal original, il y a donc une perte irréversible d'informations. Le dispositif selon l'invention remédie à ces inconvénients.

Selon l'invention, un dispositif de commande automatique de la fonction de transfert d'un système vidéo comportant des moyens d'acquisition de la distribution des luminances d'un signal vidéo $V_e$ couplés à des moyens de calcul de la fonction de répartition des luminances de ce signal vidéo $V_e$, et comportant des moyens, commandis par les moyens de calcul, pour corriger le signal vidéo $V_e$ afin que le signal vidéo corrigé $V_s$ couvre l'échelle des Luminances suivant une répartion fixée améliorant la perception des images, est caractérisé en ce que les moyens pour corriger le signal vidéo $V_e$ comportent un quadripôle analogique non-linéaire ayant une fonction de transfert réglable grâce à n entrées de commande; et des moyens de calcul supplémentaires pour fournir aux n entrées de commande, respectivement n valeurs de paramètres fonctions des valeurs de la fonction de répartition des luminances.

L'invention sera mieux comprise et d'autres caractéristiques apparaîtront à l'aide de la description ci-après et des schémas s'y rapportant sur lesquels:

—la fig. 1, est un schéma de principe d'un dispositif de commande automatique selon l'invention;

—la fig. 2 est un mode de réalisation préféré d'organes du dispositif de la fig. 1.

Les éléments qui se correspondent identiquement d'une figure à une autre sont désignés par le même repère. De plus dans les différents schémas, les dispositifs de synchronisation précise, relevant de la technologie courante, n'ont pas été reprétentés en vue de rendre les dessins plus clairs et de simplifier l'exposé.

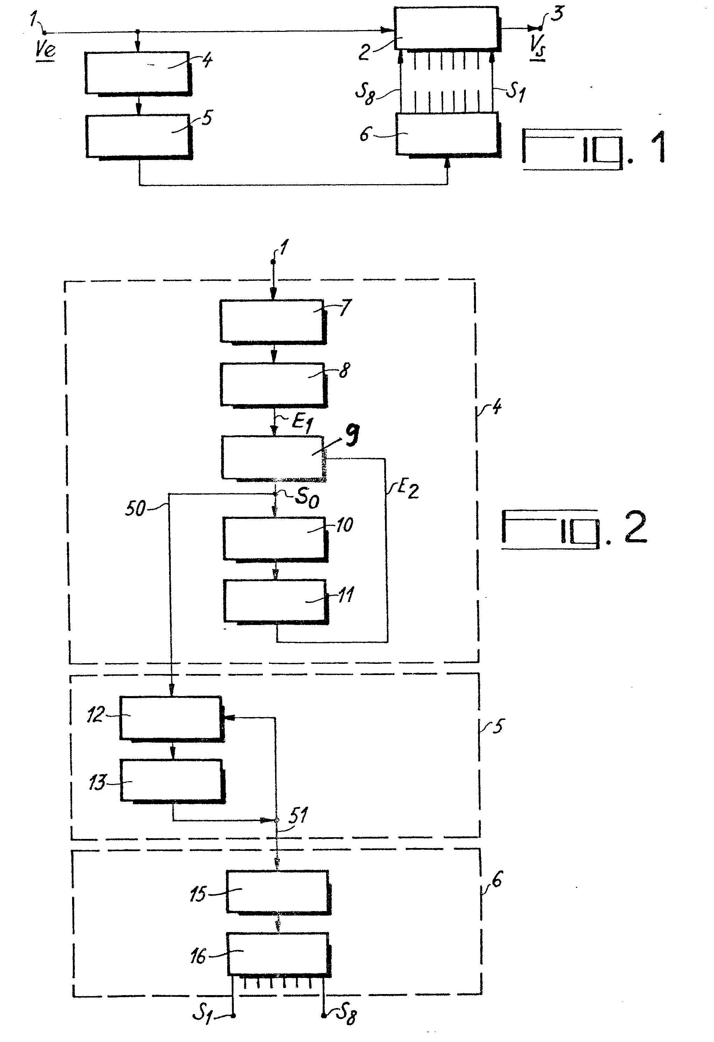

Sur la fig. 1, une borne d'entrée 1 recevant un signal vidéo $V_e$ est couplée à une borne de sortie 3 à travers un quadripole non linéaire 2 à caractéristique variable, ayant 8 entrées $S_1$ à $S_8$ de commande des valeurs des paramètres de transfert, ce quadripole est du type connu ayant une fonction de transfert en ligne brisée constituée d'un nombre prédéterminé de segments linéaires.

Dans l'exemple décrit, le quadripole e été choisi à huit paramètres de transfert variables, soit quatre couples de seuil et de gain correspondant à quatre segments. Un tel quadripole comporte quatre amplificateurs à seuil au-dessous duquel aucun signal n'est transmis, et au-dessus duquel les signaux sont transmis avec un gain désiré.

Ainsi le quadripole 2 délivre sur la borne de sortie 3 un signal vidéo $V_s$ corrigé égal à F. $V_e$, F étant la fonction de transfert du quadripole; ce signal $V_s$ étant réalisé par la somme des quatre signaux de sortie des amplificateurs.

L'invention consiste à commander automatiquement les valeurs des paramètres de transfert pour obtenir un signal corrigé $V_s$ dans lequel la répartition des amplitudes du signal de luminance est telle qu'elle correspond à des conditions optimales de vision quelles que soient les conditions de prises de vues. Dans l'exemple décrit, il est choisi une équirépartition de l'histogramme des amplitudes du signal de luminance.

Ce résultat est obtenu lorsque la fonction de transfert F est égale à la fonction de répartition des amplitudes du signal de luminance. Les éléments de la fig. 1 détaillés sur la fig. 2, que nous allons décrire dans la suite permettent d'obtenir les valeurs des huit paramètres de transfert à appliquer aux huit entrées de commande du quadripole pour obtenir une fonction de transfert F qui soit une approximation par segments de cette fonction de répartition.

Toujours sur la figure 1 est représentée la borne d'entrée 1 recevant le signal vidéo $V_e$, reliée à l'entrée de moyens d'acquisition 4. Ces moyens 4 analysent statistiquement la répartition en amplitude de 60 000 échantillons du signal de luminance parmi 32 niveaux d'amplitude donnés. Les 60 000 échantillons résultent de l'analyse de 60 000 domaines recouvrant tout une image, et les 32 niveaux d'amplitude sont répartis suivant des intervalles réguliers sur toute l'échelle des amplitudes des luminances, c'est-à-dire du noir au blanc. Les moyens 4 permettent donc d'acquérir la fonction représentative de l'histogramme (nombre d'échantillons pour chacun des 32 niveaux envisagés). Des moyens de calcul 5, reliés à la sortie des moyens 4, calculent l'intégrale de cette fonction, cette intégrale étant par définition la fonction de répartition des niveaux d'amplitude des échantillons.

A partir de cette fonction de répartition, des moyens de calcul auxiliaire 6, ayant une entrée reliée à la sortie des moyens 5, et huit sorties $S_1$ à $S_8$ reliées respectivement aux huit entrées de commande du quadripole non linéaire 2, calculent les valeurs des huit paramètres de transfert $A_1$ à $A_4$ et $G_1$ à $G_4$ à appliquer aux entrées de commande, $A_i$ et $G_i$ (i variant de 1 à 4) représentant respectivement les valeurs de seuil et de gain des amplificateurs du quadripole. Ces valeurs calculées sont telles que la fonction de transfert F réalisée est une approximation par segments de la fonction de répartition calculée par les moyens 5.

Pour mieux expliquer le fonctionnement du dispositif, les organes 4, 5 et 6 de la figure 1 ont été détaillés sur la figure 2.

Sur cette figure, est représenté un échantillonneur 7 couplant la borne d'entrée 1 à un convertisseur analogique numérique 8 ayant une sortie reliée à une entrée d'adressage $E_1$ d'une mémoire 9. Cette mémoire 9 ayant en outre une sortie $S_0$ et une entrée de données $E_2$ couplées entre elles à travers une mémoire tampon 10 en série avec un additionneur 11. La sortie $S_0$ de cette mémoire 9 est reliée en outre à une première entrée d'un additionneur 12, cette entrée correspondant à celle des moyens de calcul 5. Une deuxième entrée et la sortie de cet additionneur 12 sont respectivement couplées à l'entrée 51 d'un microordinateur 15 inclus dans les moyens de calcul 6 et à cette même entrée 51 à travers une mémoire tampon 13.

La sortie de ce microordinateur 15 est couplée à l'entrée d'une mémoire 16. Cette mémoire 16 comporte huit sorties $S_1$ à $S_8$ correspondant aux huit sorties des moyens de calcul 6.

Le fonctionnement du dispositif selon le mode de réalisation représenté par les figures 1 et 2 est le suivant:

Les informations analogiques, correspondant au signal vidéo $V_e$, reçues sur la borne d'entrée 1, sont échantillonnées par l'échantillonneur 7 et converties en signaux binaires par le convertisseur analogique numérique 8.

Ainsi dans l'exemple décrit, le signal vidéo $V_e$ résultant de l'analyse d'une image est échantillonné en 60 000 domaines suivant un signal d'horloge H.

Le niveau d'amplitude du signal de luminance de chacun de ces domaines est codé suivant une échelle de 32 niveaux.

Pour chaque échantillon, le convertisseur délivre un nombre binaire de cinq bits qui caractérise le niveau de l'amplitude du signal de luminance du domaine considéré. Les valeurs de ces bits sont appliquées en parallèle sur l'entrée d'adressage $E_1$ de la mémoire 9, qui comporte 32 cases de mémoire d'une capacité égale au nombre de domaines et dont le contenu est remis à zéro au début de chaque image échantillonnée.

Pour un domaine donné dont le niveau d'amplitude est k (k entier positif compris entre 1 et 32) le nombre binaire délivré par le convertisseur déclenche la mise en mémoire dans la mémoire 10 du contenu de la case k correspondante.

Lors de l'apparition du front descendant du signal d'horloge H, la valeur mémorisée par cette mémoire 10 est incrémentée d'une unité par l'additionneur 11, et la nouvelle valeur est mémorisée dans la case k de la mémoire 9.

A la fin d'une image échantillonnée, la mémoire 9 contient dans chacune de ses cases de mémoire le nombre d'échantillons du signal de luminance pour chacun des 32 niveaux d'amplitude de luminance, ce qui correspond à l'histogramme des luminances.

Nous allons maintenant décrire les moyens 5 qui calculent l'intégrale de la fonction représentative de l'histogramme contenue dans la mémoire 9.

A la fin d'une image échantillonnée, le microordinateur déclenche un cycle de lecture en série des cases de la mémoire 9, qui se termine avant le début de l'image suivante.

Chaque contenu des cases de la mémoire 9 est transféré dans le microordinateur 15 à travers les moyens 5 constitués de l'additionneur 12 associé à la mémoire tampon 13, qui fonctionnent en intégrateur numérique. Cet intégrateur délivre les valeurs des ordonnées de la fonction de répartition, à partir desquelles le microordinateur 15 comprenant un microprocessur MC 6800 éxécute un programme de calcul des valeurs de seuil $A_1$ à $A_4$ et de gain $G_1$ à $G_4$ à appliquer aux huit entrées du quadripole 2.

Ces valeurs sont calculées d'après les variations de la pente de la fonction de répartition de façon à ce qu'elles commandent une fonction de transfert du quadripole qui soit une approche par quatre segments de la fonction de répartition.

Une telle fonction de transfert définie par les paramètres calculés $A_1$ à $A_4$ et $G_1$ à $G_4$ transforme le signal $V_e$ en un signal $V_s$ dont l'histogramme des luminances est équiréparti, ce qui correspond à de bonnes conditions de vision.

Bien entendu de nombreuses variantes de réalisation sont possibles par rapport aux dispositions adoptées dans l'exemple décrit.

En particulier, le quadripole non linéaire peut comporter un nombre quelconque de paramètres afin de mieux adapter la fonction de transfert à la fonction de répartition; il en est de même du nombre d'échantillons et du nombre de niveaux d'amplitude du signal de luminance.

Il a été pris comme exemple d'obtenir une équirépartition de l'histogramme des luminances, mais toute autre répartition aurait pu être envisagée, ce qui aurait conduit à calculer une fonction de transfert différente de la fonction de répartition.

Dans ce but le calcul des paramètres de transfert peut être effectué à partir d'une fonction f(x) pondérant la fonction de répartition G(x). Notamment un dispositif dans lequel la fonction f(x) est calculée suivant la loi

$$f(x) = \frac{1}{2} x + \frac{1}{2} G(x)$$

est réalisable; les variations de la fonction f(x) sont ainsi supérieures à celles de G(x) dans les zones de faibles variations, d'où une augmentation du paramètre de transfert gain dans ces zones et une amélioration des conditions de vision dans ces zones de luminance.

Dans une variante du dispositif décrit, il est tenu compte dans le calcul des paramètres de transfert de la non linéarité du synthétiseur pour effectuer la correction nécessaire correspondante. Il peut aussi être prévu d'insérer dans les moyens 6 une commande manuelle des paramètres de transfert permettant d'obtenir un effet visuel au goût du réalisateur.

Il est à la portée de l'homme de l'art de trouver une méthode de calcul des paramètres de transfert par le microordinateur 15, par exemple la méthode des moindres carrés.

Les moyens de calcul 4 de la distribution des amplitudes de luminance ont été décrits en logique câblée, mais un microordinateur peut très bien effectuer un tel calcul.

Il en est de même du calcul de la fonction de répartition, les moyens de calcul 5 peuvent être réalisés à l'aide d'un microordinateur.

Bien entendu le dispositif décrit peut s'insérer dans un système vidéo à partir d'une source vidéo quelconque.

**Revendications**

1. Dispositif de commande automatique de la fonction de transfert d'un système vidéo comportant des moyens (4) d'acquisition de la distribution des luminances d'un signal vidéo $V_e$ couplés à des moyens (5) de calcul de la fonction de répartition des luminances de ce signal vidéo $V_e$, et comportant des moyens (2 et 6), commandés par les moyens, de calcul, pour corriger le signal vidéo $V_e$ afin que le signal vidéo corrigé $V_s$ couvre l'échelle des luminances suivant une répartition fixée améliorant la perception des images, caractérisé en ce que les moyens pour corriger le signal vidéo $V_e$ comportent un quadripôle analogique non-linéaire (2) ayant une fonction de transfert réglable grâce à n entrées de commande ($S_1$ à $S_8$); et des moyens de calcul supplémentaires (6) pour fournir aux n entrées de commande, respectivement n valeurs de paramètres fonctions des valeurs de la fonction de répartition des luminances.

2. Dispositif selon la revendication 1, caractérisé en ce que les moyens (4) d'acquisition de la distribution des luminances effectuent une analyse statistique du signal vidéo $V_e$, et en ce que ces moyens (4) comportent: un échantillonneur (7) du signal vidéo $V_e$; un convertisseur analogique-numérique (8) des échantillons sélectionnés par l'échantillonneur; et des moyens (9, 10, 11) de mise en mémoire et de calcul de la fonction de distribution des luminances à partir des échantillons numériques délivrés par le convertisseur analogique-numérique (8).

3. Dispositif selon la revendication 2, caractérisé en ce que les moyens (9, 10, 11) de mise en mémoire et de calcul de la fonction de distribution comportent une première mémoire (9) ayant une entrée d'adressage ($E_1$) reliée à la sortie du convertisseur (8) et une sortie ($S_0$) reliée à une deuxième mémoire (10) et aux moyens (5) de calcul de la fonction de répartition, la sortie de cette deuxième mémoire (10) étant couplée à une entrée de données de la première mémoire à travers un additionneur unitaire (11).

4. Dispositif selon la revendication 3, caractérisé en ce que les moyens (5) de calcul de la fonction de répartition comportent un additionneur (12) ayant une première et une deuxième entrée respectivement couplées à la sortie ($S_0$) de la première mémoire (9) et à la sortie d'une troisième mémoire (13), la sortie de cet additionneur (12) étant reliée à l'entrée de la troisième mémoire (13) dont la sortie est en outre reliée à l'entrée (51) des moyens de calcul supplémentaires (6).

5. Dispositif selon l'une quelconque des revendications 1, 2, 3 et 4, caractérisé en ce que les moyens de calcul supplémentaires (6) comportent un microordinateur (15) couplé à la sortie des moyens de calcul (5) de la fonction de répartition, ce microordinateur (15) ayant une sortie, délivrant les valeurs des n paramètres, couplée à l'entrée d'une quatrième mémoire (16) mémorisant ces valeurs, cette quatrième mémoire (16) ayant n sorties ($S_1$ à $S_8$) couplées aux n entrées de commande du quadripôle (2), les valeurs calculées des paramètres étant telles que la fonction de transfert du quadripôle (2) correspond à la répartition fixée.

**Patentansprüche**

1. Vorrichtung zur automatischen Steuerung der Übertragungsfunktion eines Videosystems, mit Erfassungsmitteln (4) zur Erfassung der Luminanzverteilung eines Videosignals $V_e$, welche an Rechenmittel (5) zur Berechnung der Luminanzverteilungsfunktion dieses Videosignals $V_e$ angekoppelt sind, und mit durch die Rechenmittel gesteuerten Korrekturmitteln (2 und 6) zur Korrektur des Videosignals $V_e$ derart, daß das korrigierte Videosignal $V_s$ die Luminanzabstufung gemäß einer festgelegten Verteilung überdeckt, wobei die Bildwahrnehmbarkeit verbessert wird, dadurch gekennzeichnet, daß die Korrekturmittel zum Korrigieren des Videosignals $V_e$ einen analogen, nichtlinearen Vierpol (2) umfassen, dessen Übertragungsfunktion über n Steuereingänge ($S_1$ bis $S_8$) einstellbar ist; und zusätzliche Rechenmittel (6) umfassen, um an die n Steuereingänge n Parameterwerte anzulegen, die von den Werten der Luminanzübertragungsfunktion abhängen.

2. Vorrichtung nach Anspruch 1, dadurch gekennzeichnet, daß die Erfassungsmittel (4) zur Erfassung der Luminanzverteilung eine statistische Analyse des Videosignals $V_e$ durchführen und daß diese Mittel (4) umfassen: eine Abtasteinrichtung (7) zum Abtasten des Videosignals $V_e$; einen Analog-Digital-Umsetzer (8) zum Umsetzen der von der Abtasteinrichtung ausgewählten Abtastproben; und Mittel (9, 10, 11) zum Speichern und Berechnen der Luminanzverteilungsfunktion ausgehend von den digitalen Abtastproben, die der Analog-Digital-Umsetzer (8) abgibt.

3. Vorrichtung nach Anspruch 2, dadurch gekennzeichnet, daß die Mittel (9, 10, 11) zum Speichern und Berechnen der Verteilungsfunktion einen ersten Speicher (9) umfassen, der einen mit dem Ausgang des Umsetzers (8) verbundenen Adressiereingang ($E_1$) und einen Ausgang ($S_0$) aufweist, welcher mit einem zweiten Speicher (10) und mit den Mitteln (5) zur Berechnung der Verteilungsfunktion verbunden ist, wobei der Ausgang dieses zweiten Speichers (10) mit einem Dateneingang des ersten Speichers über einen den Wert 1 addierenden Addierer (11) verbunden ist.

4. Vorrichtung nach Anspruch 3, dadurch gekennzeichnet, daß die Mittel (5) zur Berechnung der Verteilungsfunktion einen Addierer (12) umfassen, dessen erster Eingang an den Ausgang ($S_0$) des ersten Speichers (9) und dessen zweiter Eingang an den Ausgang eines dritten Speichers (13) angekoppelt ist, wobei der Ausgang des Addierers (12) mit dem Eingang des dritten Speichers (13) verbunden ist, dessen Ausgang ferner mit dem Eingang (51) der zusätzlichen Rechenmittel (6) verbunden ist.

5. Vorrichtung nach einem der Ansprüche 1, 2, 3 und 4, dadurch gekennzeichnet, daß die zusätzlichen Rechenmittel (6) einen Mikrocomputer (15) umfassen, der an den Ausgang der Rechenmittel (5) zur Berechnung der Verteilungsfunktion angekoppelt ist und einen Ausgang aufweist, welcher die Werte der n Parameter abgibt und an den Eingang eines vierten Speichers (16) angekoppelt ist, welcher diese Werte speichert und n Ausgänge ($S_1$ bis $S_8$) aufweist, die an die n Steuereingänge des Vierpols (2) angekoppelt sind, wobei die berechneten Werte der Parameter so ausgelegt sind, daß die Übertragungsfunktion des Vierpols (2) der festgelegten Verteilung entspricht.

**Claims**

1. Device for automatically controlling the transfer function of a video system comprising acquisition means (4) for acquisition of the luminance distribution of a video signal $V_e$ coupled to means (5) for calculating the luminance distribution function of this video signal $V_e$ and comprising means (2 and 6) controlled by the calculating means for correcting the viedo signal $V_e$ in a manner that the corrected video signal $V_s$ covers the luminance gradation in accordance with a fixed distribution improving the image perception, characterized in that the means for correcting the viedo signal $V_e$ comprise an analog non-linear quadripole (2) having a transfer function which is adjustable through n control inputs ($S_1$ to $S_8$); and additional calculating means (6) for supplying to the n control inputs, respectively, n parameter values depending on the values of the luminance distribution function.

2. Device in accordance with claim 1, characterized in that the means (4) for acquisition of the luminance distribution perform a statistical analysis of the video signal $V_e$, and in that these means (4) comprise: a video Signal $V_e$ sampler (7); an analog-digital converter (8) for converting the samples selected by the sampler; and means (9, 10, 11) for storing and calculating the luminance distribution function from the digital samples provided by the analog-digital converter (8).

3. Device in accordance with claim 2, characterized in that the means (9, 10, 11) for storing and calculating the distribution function comprise a first memory (9) having an address input ($E_1$) connected to the output of the converter (8) and an output ($S_0$) connected to a second memory (10) and to the means (5) for calculating the distribution function, the output of this second memory (10) being coupled to a data input of the first memory through a unitary adder (11).

4. Device in accordance with claim 3, characterized in that the means (5) for calculating the distribution function comprise an adder (11) having first and second inputs coupled to the output ($S_0$) of the first memory (9) and to the output of a third memory (13), respectively, the output of this adder (12) being connected to the input of the third memory (13) the output of which is further connected to the input (51) of the additional calculating means (6).

5. Device in accordance with any of claims 1, 2, 3 and 4, characterized in that the additional calculating means (6) comprise a microcomputer (15) coupled to the output of the means (5) for calculating the distribution function, this microcomputer (15) having an output providing the values of the n parameters and coupled to the input of a fourth memory (16) storing these values, this fourth memory (16) having n outputs ($S_1$ to $S_8$) coupled to n control inputs of the quadripole (2), the calculated values of the parameters being such that the transfer function of the quadripole (2) corresponds to the fixed distribution.

0019518

FIG. 1

FIG. 2

7